(19) Europäisches Patentamt
European Patent Office
Office européen des brevets

(11) **EP 0 959 556 B1**

(12) **FASCICULE DE BREVET EUROPEEN**

(45) Date de publication et mention
de la délivrance du brevet:
**12.01.2011   Bulletin 2011/02**

(51) Int Cl.:
**H02P 21/00** *(2006.01)*

(21) Numéro de dépôt: **99410069.1**

(22) Date de dépôt: **19.05.1999**

(54) **Système de régulation de moteur asynchrone à énergie minimale par commande à flux orienté**

Feldorientiertes Regelungssystem für Asynchronmotoren mit minimaler Energie

Flux oriented control system for asynchron motors with minimal energy

(84) Etats contractants désignés:
**CH DE GB IT LI SE**

(30) Priorité: **20.05.1998   FR 9806554**

(43) Date de publication de la demande:
**24.11.1999   Bulletin 1999/47**

(73) Titulaire: **Schneider Electric Industries SAS
92500 Rueil-Malmaison (FR)**

(72) Inventeurs:
• **Canudas de Wit, Carlos
38410 Corp d'Uriage (FR)**
• **Ramirez, Jose Miguel
38402 Saint Martin d'Heres Cedex 1 (FR)**
• **Georges, Didier
26100 Romans (FR)**

(56) Documents cités:
**DE-C- 19 615 095     US-A- 5 444 351**

• **PATENT ABSTRACTS OF JAPAN vol. 096, no. 010, 31 octobre 1996 (1996-10-31) & JP 08 149897 A (NISSAN MOTOR CO LTD), 7 juin 1996 (1996-06-07)**
• **C. CANUDAS DE WIT, I. SELEME: "ROBUST TORQUE CONTROL DESIGN FOR INDUCTION MOTORS: THE MINIMUM ENERGY APPROACH" AUTOMATICA, vol. 33, no. 1, 1997, pages 63-79, XP002091541**

**Description**

La présente invention concerne un système de régulation de moteur asynchrone, et plus spécifiquement un système de régulation par commande à flux orienté ou FOC (Field Oriented Control).

Le document US5444351 décrit un système de régulation de moteur asynchrone par commande à flux orienté.

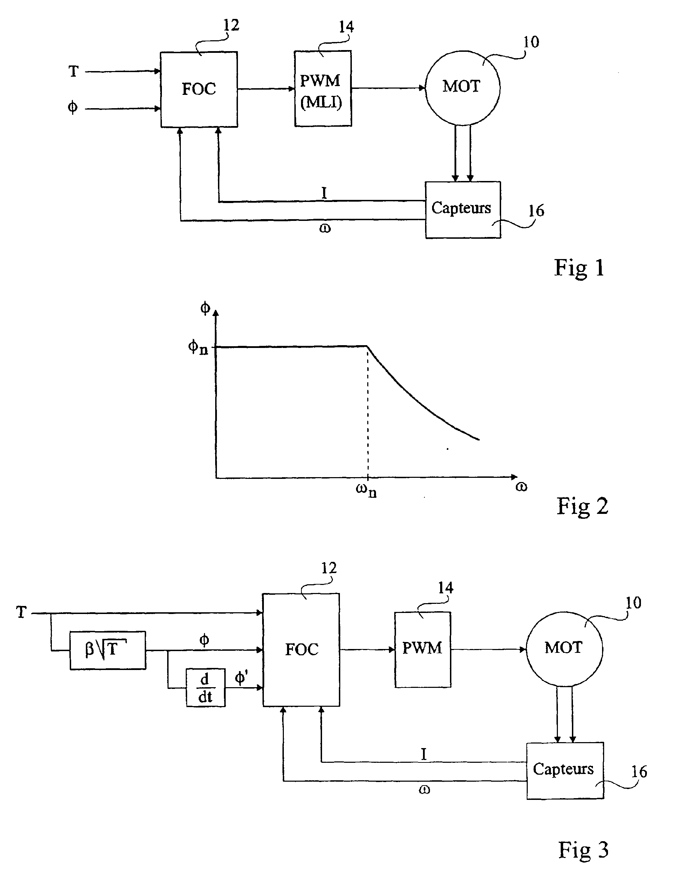

La figure 1 représente schématiquement un système classique à commande à flux orienté pour un moteur asynchrone 10. Un dispositif de commande à flux orienté 12 pilote le moteur 10 par l'intermédiaire d'un modulateur de largeur d'impulsion 14. Le dispositif de commande 12 utilise le courant I et la vitesse de rotation ω du moteur, qui lui sont fournis par des capteurs 16. Le dispositif de commande 12 reçoit deux consignes, à savoir le couple souhaité T et le flux souhaité φ.

Dans des systèmes de régulation simples, dits à flux constant, le flux φ est choisi à sa valeur nominale et on agit sur le couple de consigne T pour obtenir le fonctionnement souhaité. Par exemple, pour asservir la vitesse de rotation du moteur 10 sur une consigne de vitesse, une boucle de régulation détermine la consigne de couple T en fonction de la différence entre la vitesse de consigne et la vitesse relevée ω. En pratique, lorsque la vitesse de rotation ω devient supérieure à la vitesse de rotation nominale du moteur $\omega_n$, une consigne de flux égale au flux nominal est inadéquate car elle provoque une saturation du modulateur de largeur d'impulsion 14 conduisant à une réaction non-linéaire de celui-ci au dispositif de commande 12.

La figure 2 illustre, à une échelle arbitraire, une évolution du flux de consigne maximal en fonction de la vitesse de rotation ω pour éviter les phénomènes de saturation. Jusqu'à la vitesse de rotation nominale $\omega_n$, le flux de consigne est égal au flux nominal $\phi_n$. A partir de la vitesse $\omega_n$, le flux de consigne suit une courbe décroissante qui correspond à la limite d'entrée en saturation du modulateur de largeur d'impulsion.

Dans un système de régulation classique à commande à flux orienté, il est courant d'utiliser, sur l'entrée de flux de consigne du dispositif de commande 12, un circuit d'affaiblissement de flux qui reproduit la courbe de la figure 2 à partir de la vitesse de rotation ω fournie par les capteurs 16.

Un système de régulation à flux constant du type de la figure 1, utilisé éventuellement avec un circuit d'affaiblissement de flux selon la figure 2, fournit un rendement optimal du moteur 10 dans les conditions de fonctionnement nominales. Or, dans de nombreuses applications (pompes, véhicules électriques...), les moteurs fonctionnent souvent dans des conditions éloignées des conditions nominales, notamment en sous-régime. Le rendement du moteur devient alors particulièrement mauvais.

La figure 3 représente une solution pour optimiser le rendement à un régime quelconque du moteur, telle que décrite dans l'article intitulé "Robust Torque Control Design for Induction Motors: the Minimal Energy Approach", par C. Canudas de Wit and I. Seleme, paru dans Automatica, volume 33, N° 1, pages 63-79, 1997. Cette solution est basée sur le système de régulation à commande à flux orienté de la figure 1. Le dispositif de commande 12, au lieu de recevoir un flux de consigne constant, reçoit un flux de consigne φ qui est une fonction de la consigne de couple T. Plus spécifiquement, le flux de consigne φ est égal à β√T, avec $\beta = \phi_n / \sqrt{T_n}$, où $\phi_n$ est le flux nominal et $T_n$ le couple nominal du moteur. Bien entendu, le cas échéant, on applique au flux de consigne φ la fonction d'affaiblissement de la figure 2. Par ailleurs, le dispositif de commande à flux orienté 12 est ici prévu pour recevoir la dérivée φ' en fonction du temps du flux de consigne φ.

Un tel système, particulièrement simple, fournit d'excellents résultats quel que soit le régime du moteur 10, à condition que ce régime soit quasi-stationnaire. Si la consigne de couple T varie trop rapidement, les performances du système se dégradent et deviennent même plus mauvaises que celles d'un système à flux constant.

Il existe de la littérature sur des solutions par calcul numérique ou en utilisant des heuristiques qui sont destinées à déterminer à tout instant les paramètres optimaux de la commande. Du fait de la complexité des calculs qui doivent être effectués en temps réel, ces solutions sont trop coûteuses pour être appliquées en pratique.

Un objet de la présente invention est de prévoir un système de régulation particulièrement simple pour un moteur asynchrone, qui permette un fonctionnement dans des conditions optimales, quel que soit le régime du moteur et la vitesse de variation de la consigne.

Pour atteindre cet objet, la présente invention prévoit un système de régulation de moteur asynchrone par commande à flux orienté, réagissant à une consigne de couple et à une consigne de flux. La consigne de flux est fournie à partir de la consigne de couple par un opérateur effectuant un filtrage passe-bas du premier ordre et calculant la racine carrée du résultat du filtrage.

Selon un mode de réalisation de la présente invention, l'opérateur effectue en outre, avant le filtrage, une limitation d'excursion de la consigne de couple entre un seuil minimal et un seuil maximal.

Selon un mode de réalisation de la présente invention, l'opérateur effectue en outre une limitation du résultat de la racine carrée à une valeur maximale qui est constante jusqu'à une valeur nominale de la vitesse de rotation du moteur, puis décroissante en fonction de la vitesse de rotation, et ensuite un deuxième filtrage passe-bas du premier ordre.

Selon un mode de réalisation de la présente invention, la fonction de transfert du filtrage passe-bas s'exprime par :

$$\frac{b}{a+s} \quad avec \quad a = \frac{2R_r T_n}{n\phi_n^2} \quad et \quad b = \frac{2R_r}{n}$$

où s est l'opérateur de Laplace, $R_r$ la résistance du rotor du moteur, $T_n$ le couple nominal du moteur, n le nombre de pôles du moteur, et $\phi_n$ le flux nominal du moteur.

Selon un mode de réalisation de la présente invention, le système réagit également à la dérivée par rapport au temps de la consigne de flux.

Selon un mode de réalisation de la présente invention, ledit seuil maximal est le couple nominal du moteur et ledit seuil minimal est de l'ordre de 4 % du couple nominal.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1, précédemment décrite, représente schématiquement un système de régulation à commande à flux orienté pour un moteur asynchrone ;
la figure 2, précédemment décrite, illustre une fonction d'affaiblissement de flux classique à appliquer à une consigne de flux pour obtenir un fonctionnement toujours linéaire ;
la figure 3 illustre une solution classique utilisant le système de la figure 1 pour obtenir un rendement maximal à un régime stationnaire quelconque du moteur ;
la figure 4 représente schématiquement des éléments de traitement selon l'invention, prévus pour déterminer un flux de consigne particulier à partir d'un couple de consigne ; et
la figure 5 représente un diagramme illustrant les performances des systèmes des figures 1, 3 et 4 en fonction de la vitesse de variation de la consigne.

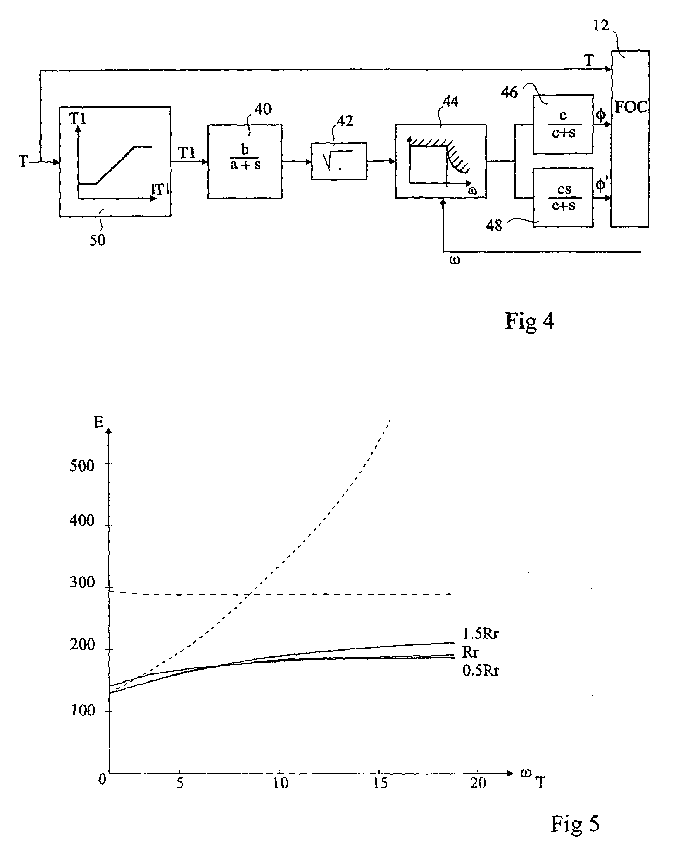

En figure 4, une chaîne de traitement selon l'invention fournit, à partir d'une consigne de couple T, une consigne de flux $\phi$ à un dispositif de commande à flux orienté 12 incorporé dans un système du type de la figure 1.

Cette chaîne de traitement est le fruit d'une étude approfondie effectuée par les inventeurs.

La fonction essentielle de cette chaîne de traitement est de réaliser un filtrage passe-bas du premier ordre sur le couple de consigne T et de prendre, en tant que flux de consigne, la racine carrée du résultat du filtrage. Ces opérations sont matérialisées à la figure 4 par un filtre 40 suivi d'un circuit de calcul de racine carrée 42. D'autres éléments, non encore décrits, de la chaîne de traitement peuvent être omis dans certaines conditions de fonctionnement du système.

La fonction de transfert du filtre 40 s'exprime par b/(a + s), où a et b sont des constantes et s est l'opérateur de Laplace. Les valeurs optimales pour les constantes de ce filtre sont :

$$a = \frac{2R_r T_n}{n\phi_n^2} \quad et \quad b = \frac{2R_r}{n}$$

où $R_r$ est la résistance du rotor du moteur, $T_n$ le couple nominal du moteur, n le nombre de pôles du moteur, et $\phi_n$ le flux nominal du moteur.

La figure 5 est destinée à illustrer le gain de performance obtenu avec un système selon l'invention. Elle représente des courbes de consommation d'énergie en fonction de la vitesse de variation de la consigne de couple T. Les essais ont été effectués avec une consigne de couple sinusoïdale variant entre -10 % et +10 % du couple nominal du moteur et dont la fréquence $\omega_T$ est reportée en radians par seconde. On a utilisé un moteur de 7,5 kW entraînant une charge d'inertie 0,22 kg·m². L'énergie consommée E est exprimée en Joules sur 4 s.

Une courbe en tirets représente l'énergie consommée en utilisant un système classique à flux constant du type de la figure 1. La courbe en pointillés représente l'énergie consommée en utilisant un système optimisé classique du type de la figure 3. Une famille de courbes en trait plein représente l'énergie consommée en utilisant un système de régulation selon l'invention.

On s'aperçoit que le système à flux constant produit une consommation d'énergie (en tirets) sensiblement constante et de valeur relativement élevée. Le système optimisé classique de la figure 3 produit une consommation d'énergie (en pointillés) optimale en régime stationnaire ($\omega_T = 0$), mais qui croît régulièrement en fonction de la fréquence du couple de consigne, et dépasse rapidement la consommation d'énergie du système à flux constant.

La consommation d'énergie (en trait plein) produite en utilisant un système de régulation selon l'invention croît lentement à partir de la valeur optimale du régime stationnaire et s'aplatit aux fréquences élevées du couple de consigne, de manière à rester nettement inférieure à l'énergie consommée avec les deux systèmes de régulation classiques.

Les valeurs optimales des constantes a et b, fournies ci-dessus, dépendent de la résistance $R_r$ du rotor du moteur. Or, cette résistance varie notamment en fonction de la température du moteur. Il est courant d'observer des variations de $\pm$ 50 % autour de la valeur nominale. La famille de courbes en trait plein de la figure 5 illustre la plage de variation de la consommation d'énergie en fonction de la variation de la résistance du rotor.

On s'aperçoit que la performance du système de régulation se dégrade aux vitesses élevées si la résistance du rotor est supérieure à sa valeur nominale, et aux vitesses faibles si la résistance du rotor est inférieure à sa valeur nominale. Mais les performances globales restent néanmoins nettement meilleures que celles des systèmes classiques.

Cette famille de courbes montre également que l'on peut choisir des constantes a et b dans une plage relativement grande sans affecter de manière sensible les performances du système.

Si l'on veut adapter le système de régulation selon l'invention à toutes les applications envisageables, la chaîne de traitement de la figure 4 est de préférence complétée par les éléments décrits ci-après.

Un circuit d'affaiblissement de flux classique 44, décrit en relation avec la figure 2, est disposé après le circuit 42 de calcul de racine carrée. Ce circuit 44 requiert une information de vitesse de rotation ω fournie par les capteurs 16 du système de régulation classique de la figure 1.

Comme on l'a précédemment indiqué, le circuit d'affaiblissement de flux 44 fait décroître le signal de sortie du circuit 42 progressivement en fonction de la vitesse au-delà de la vitesse limite de saturation du modulateur de largeur d'impulsion.

La consigne de flux ϕ fournie au dispositif de commande à flux orienté 12 arrive par un filtre passe-bas du premier ordre 46 qui reçoit la sortie du circuit d'affaiblissement de flux 44. Le dispositif de commande à flux orienté 12 peut être prévu, comme à la figure 3, pour tenir compte de la dérivée ϕ' de la consigne de flux ϕ. Cette dérivée est fournie par un filtre 48 recevant également la sortie du circuit 44. Si la fonction de transfert du filtre 46 s'exprime par c/(c + s), où c est une constante et s l'opérateur de Laplace, la fonction de transfert du filtre 48 s'exprime par cs/(c + s).

Les filtres 46 et 48 sont utilisés pour assurer que les consignes de flux ϕ et ϕ' puissent être dérivées au moins une fois, ce que requiert le dispositif de commande à flux orienté 12. La bande passante des filtres 46 et 48 est choisie supérieure à celle du filtre 40, et son choix n'affecte pas les caractéristiques du système de régulation.

Par ailleurs, le filtre 40 est précédé d'un circuit de limitation d'excursion 50 qui fournit la valeur absolue du couple de consigne T lorsque celui-ci évolue entre un seuil maximal et un seuil minimal. Lorsque la valeur absolue du couple de consigne est inférieure au seuil minimal, le circuit 50 fournit ce seuil minimal, tandis que si la valeur absolue du couple de consigne est supérieure au seuil maximal, le circuit 50 fournit ce seuil maximal. En pratique, le seuil maximal est le couple nominal et le seuil minimal est de l'ordre de 4 % du couple nominal.

## Revendications

1. Système de régulation de moteur asynchrone par commande à flux orienté, réagissant à une consigne de couple (T) et à une consigne de flux (ϕ), **caractérisé en ce que** la consigne de flux est fournie à partir de la consigne de couple par un opérateur effectuant un filtrage passe-bas du premier ordre (40) et calculant la racine carrée (42) du résultat du filtrage.

2. Système de régulation selon la revendication 1, **caractérisé en ce que** l'opérateur effectue en outre, avant le filtrage, une limitation d'excursion (50) de la consigne de couple (T) entre un seuil minimal et un seuil maximal.

3. Système de régulation selon la revendication 1 ou 2, **caractérisé en ce que** l'opérateur effectue en outre une limitation (44) du résultat de la racine carrée (42) à une valeur maximale qui est constante jusqu'à une valeur nominale ($\omega_n$) de la vitesse de rotation du moteur, puis décroissante en fonction de la vitesse de rotation, et ensuite un deuxième filtrage passe-bas du premier ordre (46).

4. Système de régulation selon la revendication 1, **caractérisé en ce que** la fonction de transfert du filtrage passe-bas s'exprime par :

$$\frac{b}{a + s} \quad avec \quad a = \frac{2R_r T_n}{n\phi_n^2} \quad et \quad b = \frac{2R_r}{n}$$

où s est l'opérateur de Laplace, $R_r$ la résistance du rotor du moteur, $T_n$ le couple nominal du moteur, n le nombre de pôles du moteur, et $\phi_n$ le flux nominal du moteur.

5. Système de régulation selon l'une quelconque des revendications 1 à 4, **caractérisé en ce qu'**il réagit également à la dérivée par rapport au temps de la consigne de flux.

6. Système de régulation selon la revendication 2, **caractérisé en ce que** ledit seuil maximal est le couple nominal du moteur et ledit seuil minimal est de l'ordre de 4 % du couple nominal.

## Claims

1. Regulation system for an asynchronous motor by field oriented control, reacting to a torque set value (T) and a flux set value ($\phi$), **characterized in that** the flux set value is supplied from the torque set value by an operator carrying out first order low pass filtering (40) and calculating the square root (42) of the result of the filtering.

2. Regulation system according to claim 1, **characterized in that** the operator also applies a limitation (50) to excursions of the torque set value (T) between a minimum threshold and a maximum threshold, before filtering.

3. Regulation system according to claim 1 or 2, **characterized in that** the operator also applies a limitation (44) to the result of the square root (42) equal to a maximum value that is constant up to a nominal value ($\omega_n$) of the motor rotation speed, and then decreases as a function of the rotation speed, and then carries out a second first order low pass filtering (46).

4. Regulation system according to claim 1, **characterized in that** the low pass filter transfer function is expressed as follows:

$$\frac{b}{a+s} \; where \quad a = \frac{2R_r T_n}{n\phi_n^2} \; and \; b = \frac{2R_r}{n}$$

where s is the Laplace operator, $R_r$ is the resistance of the motor rotor, $T_n$ is the motor nominal torque, n is the number of poles in the motor, and $\phi_n$ is the nominal flux of the motor.

5. Regulation system according to any one of claims 1 to 4, **characterized in that** the system also reacts to the derivative of the flux set value with respect to time.

6. Regulation system according to claim 2, **characterized in that** the said maximum threshold is the nominal motor torque and the said minimum threshold is of the order of 4% of the nominal torque.

## Patentansprüche

1. System zum Regulieren eines asynchronen Motors durch Steuerung mit gerichtetem Fluss, die auf einen Drehmomentsollwert (T) und auf einen Flusssollwert ($\phi$) reagiert, **dadurch gekennzeichnet, dass** der Flusssollwert anhand des Drehmomentsollwerts durch einen Operator geliefert wird, der eine Tiefpassfilterung erster Ordnung (40) ausführt und die Quadratwurzel (42) des Filterungsergebnisses berechnet.

2. Regulierungssystem nach Anspruch 1, **dadurch gekennzeichnet, dass** der Operator außerdem vor der Filterung eine Auswanderungsbegrenzung (50) des Drehmomentsollwerts (T) zwischen einem minimalen Schwellenwert und einem maximalen Schwellenwert vornimmt.

3. Regulierungssystem nach Anspruch 1 oder 2, **dadurch gekennzeichnet, dass** der Operator außerdem eine Begrenzung (44) des Ergebnisses der Quadratwurzel (42) auf einen Maximalwert, der bis zu einem Nennwert ($\omega_n$) der Drehzahl des Motors konstant ist und dann als Funktion der Drehzahl abnimmt, und anschließend eine zweite Tiefpassfilterung erster Ordnung (46) vornimmt.

4. Regulierungssystem nach Anspruch 1, **dadurch gekennzeichnet, dass** die Übertragungsfunktion der Tiefpassfilterung gegeben ist durch:

$$\frac{b}{a + s}, \quad \text{mit} \quad \frac{2R_r T_n}{n\phi_n^2} \quad \text{und} \quad b = \frac{2R_r}{n}$$

wobei s der Laplace-Operator ist, $R_r$ der Widerstand des Rotors des Motors ist, $T_n$ das Nenndrehmoment des Motors ist, n die Anzahl der Pole des Motors ist und $\phi_n$ der Nennfluss des Motors ist.

5. Regulierungssystem nach einem der Ansprüche 1 bis 4, **dadurch gekennzeichnet, dass** es außerdem auf die zeitliche Ableitung des Flusssollwerts reagiert.

6. Regulierungssystem nach Anspruch 2, **dadurch gekennzeichnet, dass** der maximale Schwellenwert das Nenndrehmoment des Motors ist und der minimale Schwellenwert in der Größenordnung von 4 % des Nenndrehmoments liegt.

Fig 1

Fig 2

Fig 3

7

**Fig 4**

**Fig 5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5444351 A

**Littérature non-brevet citée dans la description**

- **C. Canudas de Wit ; I. Seleme.** Robust Torque Control Design for Induction Motors: the Minimal Energy Approach. *Automatica,* 1997, vol. 33 (1), 63-79